# EUROPEAN PATENT SPECIFICATION

(11) **EP 4 233 211 B1**
(45) Date of publication and mention of the grant of the patent: **15.10.2025**
(21) Application number: 21806154.7
(22) Date of filing: 22.10.2021
(51) Int. Cl.: H04B 10/2575

(54) **OPTICAL LINEWIDTH INDEPENDENT HIGH PURITY MMW/THZ GENERATOR EMPLOYING CASCADED DEMULTIPLEXING**
OPTISCHER, LINIENBREITENUNABHÄNGIGER, HOCHREINER MMW/THZ-GENERATOR MIT KASKADIERTEM DEMULTIPLEXEN
GÉNÉRATEUR MMW/THZ DE HAUTE PURETÉ INDÉPENDANT DE LA LARGEUR DE RAIE OPTIQUE UTILISANT UN DÉMULTIPLEXAGE EN CASCADE

(30) Priority: 22.10.2020 GB 202016809
(43) Date of publication of application: 30.08.2023
(73) Proprietor: Dublin City University, Dublin 9 (IE); The Provost, Fellows, Scholars and other Members of Board of Trinity College Dublin, Dublin 2 (IE)
(72) Inventor: DODDABALLAPURA, Prajwal, Dublin 1 D01HV06 (IE); KASZUBOWSKA-ANANDARAJAH, Aleksandra, Swords K67DP82 (IE); ANANDARAJAH, Prince, Swords K67DP82 (IE)
(74) Representative: Purdylucey Intellectual Property
(86) International application number: PCT/EP2021/079384
(87) International publication number: WO 2022/084524

(56) References cited:
- US-B1- 9 287 993
- KASZUBOWSKA-ANANDARAJAH ALEKSANDRA ET AL: "A multifunctional demultiplexer for optical frequency combs in broadband access networks", SPIE PROCEEDINGS; [PROCEEDINGS OF SPIE ISSN 0277-786X], SPIE, US, vol. 11307, 31 January 2020 (2020-01-31), pages 113070C - 113070C, XP060127622, ISBN: 978-1-5106-3673-6, DOI: 10.1117/12.2545750
- AHMAD SYED TAJAMMUL ET AL: "Active demultiplexer enabled mmW ARoF transmission of directly modulated 64-QAM UF-OFDM signals", OPTICS LETTERS, vol. 45, no. 18, 15 September 2020 (2020-09-15), US, pages 5246, XP055819537, ISSN: 0146-9592, Retrieved from the Internet <URL:https://www.osapublishing.org/DirectPDFAccess/EE0ECD3E-3293-4F66-86EED76C6A1B5904_439549/ol-45-18-5246.pdf?da=1&id=439549&seq=0&mobile=no> DOI: 10.1364/OL.399418

## Description

### Field

The disclosure relates to an optical high frequency RF generator. In particular the disclosure relates to an optical linewidth independent high purity mmW/THz generator.

### Background

Recent advances in technology, coupled with the increasing need for ultra-high speeds both in electronics and photonics has resulted in further research in high frequency bands in the millimeter wave (mmW, 30-300 GHz) and THz (300-3000 GHz) ranges. Such high-frequency signals possess a number of properties that make them very useful in a variety of applications.

High frequencies are capable of carrying large volumes of data, which can be utilised for data communications, whether in telecommunication networks like 5G and beyond, or in the industry settings. Example applications include conveying high definition images and videos.

The short wavelengths associated with mmW and THz signals provide a high spatial resolution, which can be applied to obtain an ultra-high definition images or precise position measurements. This in turn is useful in robotics, autonomous driving (radars for collision avoidance), augmented reality and security (revealing hidden objects) etc.

These frequency bands can also be effectively used for spectroscopy, providing a means to detect toxic gases or explosives. The absorption strength of gas molecules in the THz frequency range is much higher than that in the microwave region and is safer to use than mmW frequencies.

From an electronic perspective, the main problem in commercial adoption of the mmW and THz frequencies, in a number of the above-mentioned applications, is the cost and complexity of electronic generation methods. In addition, the lack of low loss THz waveguides, linear and broadband mixers, wideband passive devices are also a significant challenge.

By employing photonic-based solutions for mmW and THz generation and distribution, many of these problems can be circumvented. Firstly, by using optical heterodyning or beating of two optical modes on a detector, it is possible to generate a mmW/THz signal at an arbitrary frequency, with a quality that is virtually frequency independent. Secondly, optical devices such as modulators or detectors, are designed to operate at very high data rates, with off-the-shelf components having bandwidths of tens of GHz. Finally, by employing optics, it is possible to make use of the low loss, low dispersion, flexible, small and light passives such as fibers, couplers and splitters (a feat that is difficult to realize at THz frequencies). Thus, it is possible to perform most of the signal manipulation and transmission in the optical domain (cheaper, better performance and scalable), leaving the conversion to the mmW or THz region to be the last step before the signal radiation/transmission over air.

Numerous publications exist in the literature, for example:
- H. Shams et al., "Coherent frequency tuneable THz wireless signal generation using an optical phase lock loop system," 2017 International Topical Meeting on Microwave Photonics (MWP), Beijing, 2017, pp. 1-4, doi: 10.1109/MWP.2017.8168638.
- C. C. Renaud et al., "Photonic integration for millimetre-wave and THz systems," Microwave Photonics (MWP) and the 2014 9th Asia-Pacific Microwave Photonics Conference (APMP) 2014 International Topical Meeting on, Sendai, 2014, pp. 36-39, doi: 10.1109/MWP.2014.6994483.S. T Ahmad et.al, "Active demultiplexer enabled mmW ARoF transmission of directly modulated 64-QAM UF-OFDM signals," Opt. Lett. 45, 5246-5249 (2020).

Ahmad Syed Tajamul et al, 'Active Demuliplexer enabled mmW ARoF transmission of directly modulated 64-QAM UF-OFDM signals", OPTICS LETTERS, vol 45,3030, pages 5246. This document describes external modulation.

Kaszubowska-Anandaerajah et al, "A multifunctional demultiplexer for optical frequency comms in broadband access networks" Proc. Of SPIE Vol. 11307, 113070C describes demultiplexers arranged in parallel and the combined channels are combined for transmission.

Generating a mmW or THz signal optically entails the use of a heterodyning method, a well-known and researched concept of beating two optical modes on a photodiode to generate an electrical signal at a frequency corresponding to the wavelength separation between the optical lines. The quality of the THz signal (phase noise) is dependent on the linewidths and the phase correlation of the optical modes. If the two lines are correlated, phase noise cancellation takes place at the photodetector, resulting in a high-quality electrical output. The frequency stability on the other hand, depends on the relative distance between the optical modes. Amongst a number of possible methods, the utilization of an optical frequency comb (OFC) is one of the most attractive. It allows for the simultaneous generation of multiple THz signals, by dividing the OFC into pairs of lines, separated by the required THz frequency.

However, once the two tones are separated, the tones travel different paths, thus become prone to phase decorrelation due to any path length mismatch, which is problematic. This in turn has a detrimental effect on the quality of the generated mmW/THz signal. Furthermore, the signals suffer from the insertion loss introduced by the demultiplexer used to separate them as well as the loss from recombining the lines. There is therefore a need to provide an optical generator to overcome at least one of the above-mentioned problems.

### Summary of the Invention

According to the invention there is provided, as set out in the appended claims, an optical high frequency generator and corresponding method and in particular a high purity mmW/THz generator and corresponding method.

### Brief Description of the Drawings

The invention will be more clearly understood from the following description of an embodiment thereof, given by way of example only, with reference to the accompanying drawings, in which:
Figure 1 illustrates a schematic of (a) a mmW/ THz generator employing a cascaded demultiplexer, (b) its functionality as a data modulator. Line graph illustrates the principle of operation;
Figure 2 illustrates (a) a traditional comb based mmW/THz generator consisting of passive filters, external modulators, passive splitters and combiners, and (b) a mmW/THz generator employing active demultiplexers according to one aspect of the invention; and
Figure 3 illustrates (a) an experimental setup of the A-RoF transmission system employing dual-stage active demultiplexer, (b) line-graph illustration of the principle operation, (c) electrical spectrum of the down converted UF-OFDM data after 25 km fibre transmission. where BBU: baseband processing unit; RRU: remote radio unit; VOA: variable optical attenuator; AWG: arbitrary waveform generator; PD: photodetector; EBPF: electrical band pass filter; LO: local oscillator; RTS: real time oscilloscope.

### Detailed Description of the Drawings

The invention provides a cascaded demultiplexer (for mmW/THz generation), in combination with an optical frequency comb, which works on the principle of using a pair of active demultiplexers based on optical injection locking. The invention provides a means to filter and amplify individual comb lines generated from the optical comb.

An optical generator comprising an optical comb source and utilises two active demultiplexers in series, configured such that two tones required for the mmW/THz generation can be filtered out without the need for splitting/recombining signals. In other words, the invention provides a dual stage active demultiplexing of an optical frequency comb source. As a result, the invention avoids any potential phase decorrelation, preserves the optical power and reduces the device footprint since the entire generator can be realised as a single small photonically integrated chip.

As the active demultiplexer is preferably a semiconductor laser, the second demultiplexer can be directly modulated with the data, thus eliminating the need for an external modulator, further simplifying the design of a mmW/THz generator (further insertion loss, path mismatch, polarisation management etc.).

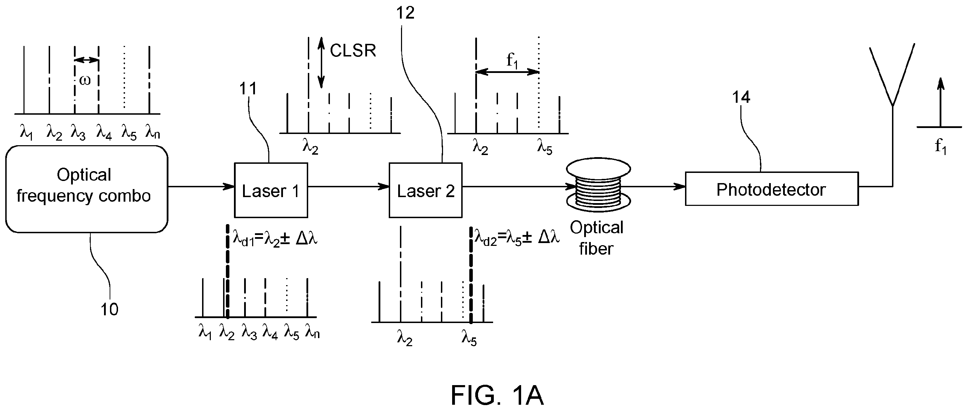

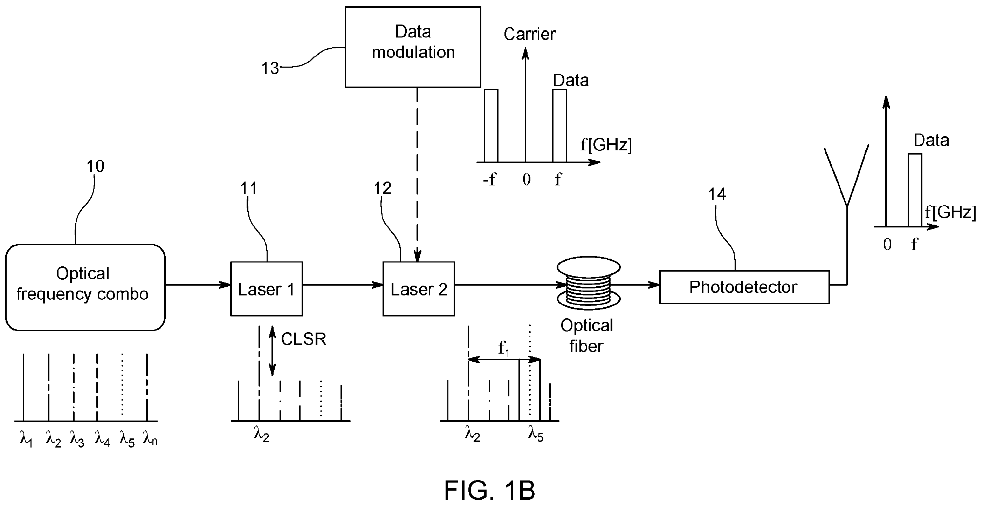

Figure 1(a) illustrates schematic of a mmW/ THz generator employing cascaded demultiplexer, laser 1 and laser 2 according to one embodiment of the invention. Figure 1(b), similar to Figure 1(a) illustrates an additional functionality, where a data modulation can be applied to the second demultiplexer, laser 2 which is arranged in series with the first demultiplexer. Line graph illustrates the principle of operation.

A high purity mmW and THz radio frequency can be generated by employing at least two multifunctional active demultiplexers in a cascaded configuration. The operational principle of Figure 1(a) is as follows: an Optical Frequency Comb (OFC) 10 is configured to generate highly coherent tones with a free spectral range (FSR) *'w*', is injected into demultiplexer 11. The wavelength of the demultiplexer 11, λ_{d1}, is thermally tuned to match the wavelength of a desired comb tone λ₁. Consequently, the demultiplexer 11 is injection locked by the tone (i.e. inherits its frequency and phase). Since the output power of the demultiplexer 11 is much higher than that of the input tone, the selected line is also amplified. The remaining, unsuppressed OFC tones also pass through Demultiplexer 11, but without any amplification.

The output of the demultiplexer 11 is injected into demultiplexer 12. In a similar fashion, the wavelength of demultiplexer 2, λ_{d2}, is matched with the comb tone (unsuppressed) separated from λ₁, by a frequency of the mmW/THz that is to be generated. While the power of these unsuppressed tones is typically low, it is still sufficient to achieve stable injection locking of the demultiplexer 12. As a consequence, demultiplexer 12 is injection locked by the desired unsuppressed tone, thus amplifying it and inheriting its phase and frequency.

Thus, at the output of the demultiplexer 12, the two amplified tones separated by the desired mmW/THz frequency are obtained. The line graph shown in Fig.1 (a), illustrates the principle operation of the mmW/THz generator.

In addition, as the active demultiplexers are standard semiconductor lasers, it is possible to encode the electrical data on the mmW/THz signal, by directly modulating the demultiplexer 12 using a modulator device 13 (as shown in Fig.1 (b)).

As a result, heterodyning of the two demultiplexed tones on a photodetector 14 generates the desired high spectral purity mmW/THz tone modulated with the data. The arrangement of the active demultiplexers enables enhanced immunity to the phase noise and improved power of the mmW/THz signal. In addition, the photonic integration of the architecture of Figure 1(a) and Figure 1(b) is easier, cost efficient and results in a smaller footprint.

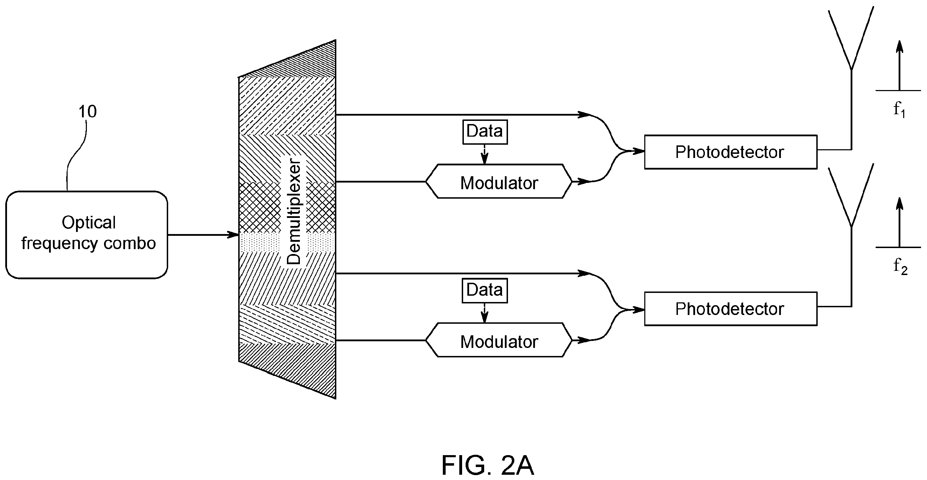

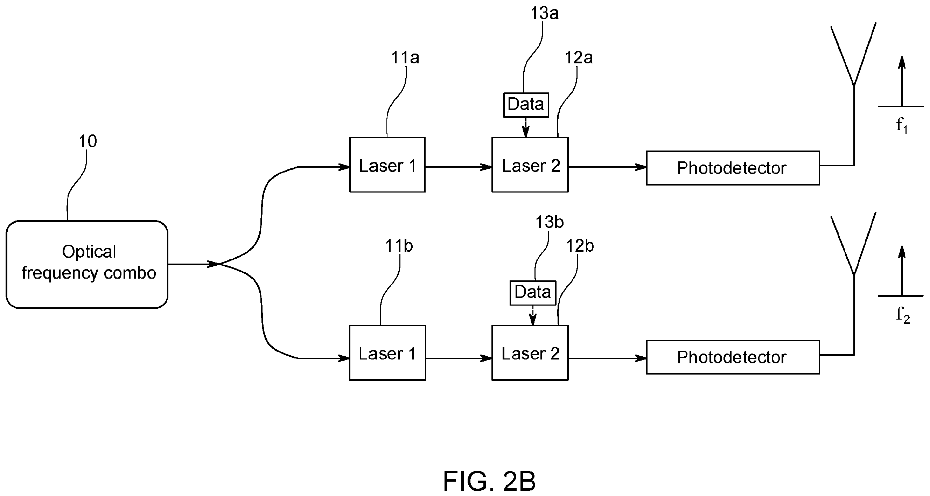

Figure 2 illustrates (a) traditional comb based mmW/THz generator consisting of passive demultiplexer, external modulators, passive splitters and combiners, and Fig 2(b) illustrates proposed mmW/THz generator employing active demultiplexers.

According to one embodiment of the invention, the mmW/THz generator can significantly simplify the way RF frequencies that are generated, as illustrated in Figure 2(b). The schematic of a standard mmW/THz photonic generator is shown in Figure 2(a), where an OFC can be demultiplexed using either a passive or an active demultiplexer, into individual comb tones that are then grouped in pairs, separated by the desired frequency. If the mmW/THz signal is to convey information, one tone out of the pair is then externally modulated with an electronic data signal. Finally, the pair of comb tones are recombined and detected (mixed) at the photodiode to generate the electrical signal. Such an architecture of the transmitter suffers from several problems:
1. Since the two tones travel different paths, phase decorrelation occurs. Maintaining the path lengths is particularly difficult if one of the tones needs to be modulated with data (different number of components in each path). The phase decorrelation reduces the quality of the generated tone, degrading the overall performance of the system employing such a transmitter. In order to minimise the impact of the path mismatch an expensive, ultra-low linewidth comb source needs to be used, which increases the cost of the generator.
2. The comb needs to be split as many times as the total number of comb tones required and then each pair of tones needs to be recombined. This introduces a loss of at least 6 dB per pair. If an external modulator is used, further loss is incurred in the modulated line.
3. Even when realised as a photonic integrated circuit (PIC), splitters and combiners occupy a large amount of space. The larger footprint also leads to an increased level of complexity e.g. of the temperature control of the device.

In contrast, the method of mmW/THz generation according the present invention overcomes all of the mentioned difficulties. As showed in Figure 2(b) an OFC comb 10 outputs to two pairs of demultiplexers, where the first pair comprise two demultiplexers 11a, 12a arranged in series and demultiplexer 12a is modulated by modulator 13a. The second pair also comprises two demultiplexers 11b, 12b arranged in series and demultiplexer 12b is modulated by modulator 13b. The architecture provides the following advantages:
- No path length mismatch: two tones traverse the same path
- Tolerance to a large optical linewidth (cheaper and simpler OFC)
- Reduced loss: split ratio reduced by a factor of two in comparison to the standard architecture, no need for a combiner
- Reduced footprint: smaller split ratio and elimination of combiners and external modulator allows for much smaller size of the device.
- Multifunctionality of the active demultiplexer: performs demultiplexing, amplification and modulator functionalities.
- Tunability: the mmW/THz frequencies can be tuned as multiples of the OFCs FSR
- Photonically integratable, further reducing cost, footprint and energy consumption

### Example Embodiment

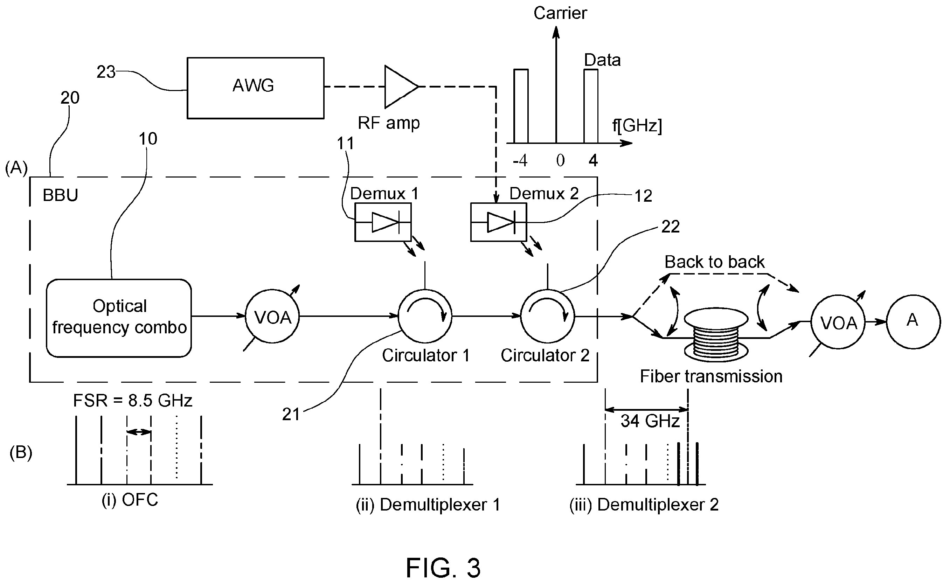

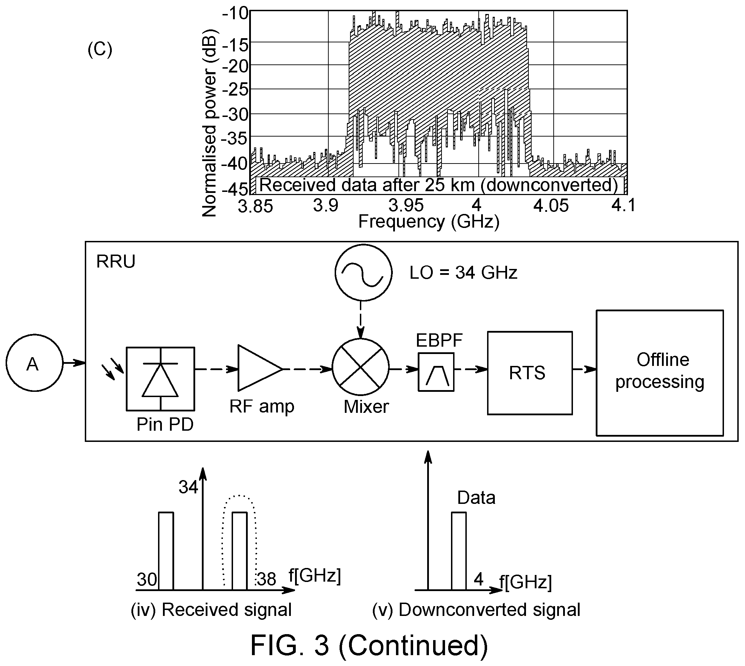

Figure 3 (a) illustrates an example setup of an A-RoF transmission system employing dual-stage active demultiplexer, (b) line graph illustration of the principle operation, (c) electrical spectrum of the down-converted UF-OFDM data after 25 km fibre transmission. BBU: baseband processing unit; RRU: remote radio unit; VOA: variable optical attenuator; AWG: arbitrary waveform generator; PD: photodetector; EBPF: electrical band pass filter; LO: local oscillator; RTS: real time oscilloscope.

The schematic of the proposed transmitter is shown in Figure 3(a) as a baseband processing unit (BBU) 20. The BBU transmitter 20 comprises an Optical Frequency Comb (OFC 10), generating highly coherent tones, followed by a semiconductor laser based dual-stage active demultiplexer 11, 12. A spectral line graph, illustrating the principle of operation of the transmitter, is shown in Figure 3(b).

The output of the OFC 10 is injected, via an optical circulator 21, to the first stage of the demultiplexer (Demux 1) 11, whose wavelength is then tuned (using the bias current and the temperature) to match the wavelength of the desired comb line. Once the alignment is achieved, Demux 11 becomes injection locked by the comb line. As a result, Demux 11 inherits the frequency and phase characteristics of the OFC, while at the same time amplifying the selected comb tone (the power of Demux 11 is much higher than that of the comb line). The remaining, unsuppressed OFC tones also pass through Demux 11, but without any amplification.

The difference between the power of the demultiplexed and the remaining comb tones can be defined as the comb line suppression ratio (CLSR). While the power of these spurious tones is low, it is sufficient to enable a stable injection locking of the second demultiplexing stage (Demux 2) 12. Therefore, a second OFC tone can be demultiplexed, by injecting the output of Demux 11 into Demux 12, via optical circulator 22. The wavelength of the latter is then tuned to match that of an unsuppressed comb tone, separated from the tone selected by Demux 11, by a frequency of the mmW signal that is to be generated.

As a result, Demux 12 is injection locked by this second comb tone, thus also inheriting the spectral characteristics of the OFC 10 and providing amplification to the selected comb tone. Hence, the output of Demux 12 consists of the two selected high power spectral components (tone selected by Demux 11 and 12), separated by the desired mmW frequency.

Since the active demultiplexer is a standard semiconductor laser, it is possible imprint the electrical data that is to be transmitted on the mmW signal, by directly modulating Demux 12 by using a modulator 23, such as an arbitrary waveform generator.

The invention provides a transmitter based on an OFC and a dual-stage active demultiplexer. Unlike other OFC-based schemes, the architecture features a single optical path, alleviating the need for optical splitters, combiners, an external modulator as well as careful path length matching mechanisms.

Furthermore, the inherent amplification provided by the active demultiplexer, removes the requirements for an external optical amplifier. As a result, the invention offers a significant cost, complexity and footprint reduction. Finally, as all the components of the transmitter can be realised in InP, the entire device can be realised within a single photonically integrated chip, providing further cost and footprint savings.

The optical generator as hereinbefore described provides a solution for a range of applications, including communications, sensing (medical and industrial) and imaging.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. a memory stick or hard disk. The carrier may be an electrical or optical signal which may be transmitted via an electrical or an optical fiber cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. An optical high frequency RF generator comprising
an Optical Frequency Comb (10) configured to generate a plurality of frequency tones; a first active demultiplexer (11) placed at the output of the Optical Frequency Comb (10), wherein the first demultiplexer is configured to be injection locked by at least one desired frequency tone;
a second active demultiplexer (12) connected to the first demultiplexer (11) and configured to be injection locked by a second frequency tone from said plurality of frequency tones wherein the output of the second demultiplexer (12) comprise two injection locked frequency tones separated by a desired frequency; and
a modulator (13) configured to drive the second demultiplexer with a data signal, such that a desired data signal is modulated onto a second demultiplexed tone, **characterised in that**: the first demultiplexer (11) and the second demultiplexer (12) are connected in series and configured such that two tones required for high frequency generation can be filtered out.

2. The optical high frequency RF generator of claim 1 wherein the at least one desired frequency tone is amplified.

3. The optical high frequency RF generator of any preceding claim comprising a photodetector (14) configured to heterodyne the two injection locked frequency tones to generate an electrical signal.

4. The optical high frequency RF generator of any preceding claim wherein a heterodyning process generates a high purity mmW/THz frequency.

5. The optical high frequency RF generator of any preceding claim wherein the first demultiplexer comprises a semiconductor laser.

6. The optical high frequency RF generator of any preceding claim wherein the second demultiplexer (11) comprises a semiconductor laser.

7. A transmitter for use in an optical communications system comprising the optical high frequency RF generator as claimed in any preceding claim.

8. A method of generating a high frequency signal using an optical generator comprising the steps of:
generating by an Optical Frequency Comb (10) a plurality of frequency tones and inputting them to a first active demultiplexer (11), wherein the first demultiplexer is injection locked by at least one desired frequency tone;
injection locking a second active demultiplexer (12) by a second frequency tone from said plurality of frequency tones; and
outputting two injection locked frequency tones separated by a desired frequency, **characterised in that**: the first demultiplexer (11) and the second demultiplexer (12) are connected in series and configured such that two tones required for high frequency generation can be filtered out.

9. The method of claim 8 comprising the step of modulating the second demultiplexer (12) with a data signal, such that a desired data signal is applied to the second demultiplexed tone.

## Patentansprüche

1. Optischer Hochfrequenz-, RF-, Generator, umfassend
einen optischen Frequenzkamm (10), der dazu konfiguriert ist, eine Vielzahl von Frequenztönen zu erzeugen; einen ersten aktiven Demultiplexer (11), der am Ausgang des optischen Frequenzkamms (10) platziert ist, wobei der erste Demultiplexer dazu konfiguriert ist, durch mindestens einen gewünschten Frequenzton injektionsverriegelt zu werden;
einen zweiten aktiven Demultiplexer (12), der mit dem ersten Demultiplexer (11) verbunden ist und dazu konfiguriert ist, durch einen zweiten Frequenzton aus der Vielzahl von Frequenztönen injektionsverriegelt zu werden, wobei die Ausgabe des zweiten Demultiplexers (12) zwei injektionsverriegelte Frequenztöne umfasst, die um eine gewünschte Frequenz getrennt sind; und
einen Modulator (13), der dazu konfiguriert ist, den zweiten Demultiplexer mit einem Datensignal anzutreiben, sodass ein gewünschtes Datensignal auf einen zweiten demultiplexten Ton moduliert wird, **dadurch gekennzeichnet, dass**: der erste Demultiplexer (11) und der zweite Demultiplexer (12) in Reihe geschaltet sind und so konfiguriert sind, dass zwei Töne, die für eine Hochfrequenzerzeugung erforderlich sind, herausgefiltert werden können.

2. Optischer Hochfrequenz-, RF-, Generator nach Anspruch 1, wobei der mindestens eine gewünschte Frequenzton verstärkt wird.

3. Optischer Hochfrequenz-, RF-, Generator nach einem vorstehenden Anspruch, umfassend einen Photodetektor (14), der dazu konfiguriert ist, die zwei injektionsverriegelten Frequenztöne zu überlagern, um ein elektrisches Signal zu erzeugen.

4. Optischer Hochfrequenz-, RF-, Generator nach einem vorstehenden Anspruch, wobei ein Überlagerungsprozess eine hochreine mmW/THz-Frequenz erzeugt.

5. Optischer Hochfrequenz-, RF-, Generator nach einem vorstehenden Anspruch, wobei der erste Demultiplexer einen Halbleiterlaser umfasst.

6. Optischer Hochfrequenz-, RF-, Generator nach einem vorstehenden Anspruch, wobei der zweite Demultiplexer (11) einen Halbleiterlaser umfasst.

7. Übertragungsvorrichtung zur Verwendung in einem optischen Kommunikationssystem, umfassend den optischen Hochfrequenz-, RF-, Generator nach einem vorstehenden Anspruch.

8. Verfahren zum Erzeugen eines Hochfrequenzsignals unter Verwendung eines optischen Generators, umfassend die Schritte zum:
Erzeugen, durch einen optischen Frequenzkamm (10), einer Vielzahl von Frequenztönen und Eingeben derselben in einen ersten aktiven Demultiplexer (11), wobei der erste Demultiplexer durch mindestens einen gewünschten Frequenzton injektionsverriegelt wird;
Injektionsverriegeln eines zweiten aktiven Demultiplexers (12) durch einen zweiten Frequenzton aus der Vielzahl von Frequenztönen; und
Ausgeben von zwei injektionsverriegelten Frequenztönen, die durch eine gewünschte Frequenz voneinander getrennt sind, **dadurch gekennzeichnet, dass**: der erste Demultiplexer (11) und der zweite Demultiplexer (12) in Reihe geschaltet sind und so konfiguriert sind, dass zwei Töne, die für eine Hochfrequenzerzeugung erforderlich sind, herausgefiltert werden können.

9. Verfahren nach Anspruch 8, umfassend den Schritt zum Modulieren des zweiten Demultiplexers (12) mit einem Datensignal, sodass ein gewünschtes Datensignal auf den zweiten demultiplexten Ton angewendet wird.

## Revendications

1. Générateur RF optique à haute fréquence comprenant
un peigne (10) de fréquences optiques configuré pour générer une pluralité de tonalités de fréquence ; un premier démultiplexeur actif (11) placé à la sortie du peigne (10) de fréquences optiques, dans lequel le premier démultiplexeur est configuré pour être verrouillé par injection par au moins une tonalité de fréquence souhaitée ;
un second démultiplexeur (12) actif relié au premier démultiplexeur (11) et configuré pour être verrouillé par injection par une seconde tonalité de fréquence parmi ladite pluralité de tonalités de fréquence dans lequel la sortie du second démultiplexeur (12) comprend deux tonalités de fréquence verrouillées par injection séparées par une fréquence souhaitée ; et
un modulateur (13) configuré pour entraîner le second démultiplexeur avec un signal de données, de telle sorte qu'un signal de données souhaité soit modulé sur une seconde tonalité démultiplexée, **caractérisé en ce que** : le premier démultiplexeur (11) et le second démultiplexeur (12) sont reliés en série et configurés de telle sorte que deux tonalités nécessaires à la génération à haute fréquence puissent être filtrées.

2. Générateur RF optique à haute fréquence selon la revendication 1 dans lequel la au moins une tonalité de fréquence souhaitée est amplifiée.

3. Générateur RF optique à haute fréquence selon une quelconque revendication précédente comprenant un photodétecteur (14) configuré pour hétérodyner les deux tonalités de fréquence verrouillées par injection afin de générer un signal électrique.

4. Générateur RF optique à haute fréquence selon une quelconque revendication précédente dans lequel un processus d'hétérodynage génère une fréquence mmW/THz de haute pureté.

5. Générateur RF optique à haute fréquence selon une quelconque revendication précédente dans lequel le premier démultiplexeur comprend un laser à semiconducteur.

6. Générateur RF optique à haute fréquence selon une quelconque revendication précédente dans lequel le second démultiplexeur (11) comprend un laser à semiconducteur.

7. Émetteur destiné à être utilisé dans un système de communication optique comprenant le générateur RF optique à haute fréquence selon une quelconque revendication précédente.

8. Procédé de génération d'un signal à haute fréquence utilisant un générateur optique, comprenant les étapes suivantes :
générer, par un peigne (10) de fréquences optiques, une pluralité de tonalités de fréquence et les entrer dans un premier démultiplexeur (11) actif, dans lequel le premier démultiplexeur est verrouillé par injection par au moins une tonalité de fréquence souhaitée ;
verrouiller par injection un second démultiplexeur (12) actif par une seconde tonalité de fréquence parmi ladite pluralité de tonalités de fréquence ; et
délivrer en sortie deux tonalités de fréquence verrouillées par injection séparées par une fréquence souhaitée, **caractérisé en ce que** : le premier démultiplexeur (11) et le second démultiplexeur (12) sont reliés en série et configurés de telle sorte que deux tonalités nécessaires à la génération à haute fréquence puissent être filtrées.

9. Procédé selon la revendication 8 comprenant l'étape consistant à moduler le second démultiplexeur (12) avec un signal de données, de telle sorte qu'un signal de données souhaité soit appliqué à la seconde tonalité démultiplexée.
